# EUROPÄISCHE PATENTSCHRIFT

(11) **EP 4 003 695 B1**
(45) Veröffentlichungstag und Bekanntmachung des Hinweises auf die Patenterteilung: **07.05.2025**
(21) Anmeldenummer: 20751073.6
(22) Anmeldetag: 09.07.2020
(51) Int. Cl.: B29C 64/112, B33Y 10/00, B33Y 70/00, B29C 64/106, B33Y 80/00, B29C 64/135, B29C 64/273, B33Y 30/00, C07F 7/18, C08G 77/00, C08L 83/04, C08G 77/14, C08G 77/20, C08G 77/28, B29D 11/00, B29L 11/00

(54) **VERFAHREN ZUR DIGITALEN ERZEUGUNG EINES OPTISCHEN ELEMENTS MIT INTEGRIERTEN FUNKTIONALITÄTEN UND DERART HERGESTELLTES OPTISCHES ELEMENT**
METHOD FOR DIGITALLY PRODUCING AN OPTICAL ELEMENT HAVING INTEGRATED FUNCTIONALITIES AND OPTICAL ELEMENT THUS PRODUCED
PROCÉDÉ DE PRODUCTION NUMÉRIQUE D'UN ÉLÉMENT OPTIQUE À FONCTIONNALITÉS INTÉGRÉES ET ÉLÉMENT OPTIQUE AINSI PRODUIT

(30) Priorität: 24.07.2019 DE 102019211001
(43) Veröffentlichungstag der Anmeldung: 01.06.2022
(73) Patentinhaber: Fraunhofer-Gesellschaft zur Förderung der angewandten Forschung e.V., 80686 München (DE)
(72) Erfinder: DOMANN, Gerhard, 97082 Würzburg (DE); STEENHUSEN, Sönke, 97082 Würzburg (DE); KLEIN, Matthias, 97082 Würzburg (DE); REHBERGER, Matthias, 52074 Aachen (DE); MITLACHER, Matthias, 52074 Aachen (DE); VEDDER, Christian, 52074 Aachen (DE); NIPPGEN, Sebastian, 52080 Aachen (DE); BECKERT, Erik, 07745 Jena (DE); KEMPER, Falk, 07745 Jena (DE)
(74) Vertreter: Pfenning, Meinig & Partner mbB
(86) Internationale Anmeldenummer: PCT/EP2020/069395
(87) Internationale Veröffentlichungsnummer: WO 2021/013567

(56) Entgegenhaltungen:
- US-A1- 2015 291 833
- S SURESH NAIR ET AL: "Additive Manufacturing of Functional (Photoluminescent) Optical Components", 119. DGAO TAGUNG, 20 July 2018 (2018-07-20), XP055740561
- SURESH NAIR S ET AL: "3D-printed optical active components", PROCEEDINGS OF SPIE; [PROCEEDINGS OF SPIE ISSN 0277-786X VOLUME 10524], SPIE, US, vol. 10529, 21 February 2018 (2018-02-21), pages 105290W - 105290W, XP060102261, ISBN: 978-1-5106-1533-5, DOI: 10.1117/12.2287427

## Beschreibung

Die vorliegende Erfindung betrifft ein Verfahren zur digitalen Erzeugung eines optischen Elements mit integrierten Funktionalitäten, bei dem eine dreidimensionale Struktur aus einem anorganisch-organischen Hybridpolymer enthaltenden Druckmaterial mittels 3D-Druck erzeugt und eine bereichsweise Modifikation auf der Oberfläche und/oder im Volumen der Struktur mindestens ein Bereich mit einer zusätzlichen Funktionalität erfolgt. Ebenso betrifft die Erfindung ein optisches Element enthaltend eine mittels 3D-Druck aus einem anorganisch-organischen Hybridpolymer hergestellte dreidimensionale Struktur, wobei die Struktur auf der Oberfläche und/oder im Volumen mindestens einen Bereich mit einer zusätzlichen Funktionalität aufweist.

Optische Systeme werden bisher aus diversen optischen Elementen, wie Linsen, Spiegel, Blenden, etc. zusammengesetzt, um eine definierte Funktion zu erreichen. Im klassischen Fall von abbildenden Glasoptiken ist dafür die Assemblierung von ganzen Baugruppen nötig, die jeweils präzise gefügt werden müssen und sowohl ein hohes Gewicht als auch ein großes Volumen haben.

Bei den aus dem Stand der Technik bekannten Kameraobjektiven werden diverse optische Komponenten, insbesondere geschliffene und polierte sphärische Linsen sowie Blenden zu einer gesamten Anordnung zusammengefügt. In diesem Fall wird ein komplexes System von Linsen benötigt, um nicht nur die bloße Abbildung zu bewirken, sondern geleichzeitig optische Aberrationen (z.B. Farbfehler und sphärische Aberrationen) zu korrigieren. Jede einzelne Komponente muss dafür aufwendig entspiegelt werden und verursacht neben der höheren Komplexität der Optik und den damit entstehenden Systemkosten auch eine Verminderung des Lichtdurchsatzes. Genauso wie brechende Oberflächen, sind Aperturblenden (sog. Baffles) innerhalb des optischen Systems nötig, um Geisterbilder und ungewollte Lichtreflexe zu vermeiden.

Die zahlreichen Komponenten eines optischen Systems müssen durch optomechanische Bauteile präzise zueinander ausgerichtet werden, was nicht nur ein hohes Gewicht und Bauteilvolumen verursacht, sondern auch hohe Kosten für Komponenten, Montage und Justierung verursacht. Getrieben ist die Komplexität von optischen Systemen insbesondere durch die Verwendung von sphärischen Oberflächen, die kostengünstig durch Schleifen und Polieren gefertigt werden können. So lassen sich mit sehr hohem Aufwand exzellente Abbildungseigenschaften erreichen.

Eine erhebliche Verringerung der Komplexität von optischen Systemen kann durch den Einsatz von Freiformoberflächen bewirkt werden. Diese werden beispielsweise mit zerspanenden Verfahren wie Diamant-Drehen oder durch Präzisionspressen hergestellt. Der Kostenvorteil, der aus der geringeren Anzahl an Komponenten resultiert, wird jedoch durch aufwendige Nachbearbeitungsschritte der Freiformen und teure Werkzeuge wieder vergeben. Wirtschaftlicher - und daher für viele "Consumer"-Optiken relevant - ist der Einsatz von Polymeren, die durch Prägeprozesse oder Präzisionsspritzguss zu Linsen verarbeitet werden. Ein 3D-Druck von Polymeroptiken mittels Inkjet- oder SLA-Technologie (Stereolithographie) stellt diesbezüglich einen eleganten Ausweg dar, weil per se Freiformen generiert werden können. Dies ist aus EP 2.943.331 B1 bekannt, die überwiegend organische Harze (ggf. mit einem Silikonanteil zur Verbesserung der Langzeitstabilität bei kurzen Wellenlängen) zu refraktiven Oberflächen für Beleuchtungsanwendungen und Ophthalmologie verdruckt. Im Stand der Technik sind verschiedene Varianten der additiven Fertigung von refraktiven (und in Teilen auch reflektiven) optischen Komponenten (siehe angehängte Literaturliste) bekannt, die aber die typischen Probleme der 3D-gedruckten Polymeroptik aufweisen:
- Auftreten von Lagengrenzen im Volumen des gedruckten Körpers in Form von Brechzahlinhomogenitäten, die die Transmission durch den Körper vermindern.
- Digitalisierungsartefakte, d.h. eine Treppenbildung auf gedruckten Oberflächen durch die Zerlegung des Körpers in Schichten mit definiertem Abstand.
- Eingeschränkte Genauigkeit der realisierten Oberfläche und erhöhte Rauheit jeweils im Vergleich zu konventionell gefertigten Optiken.
- Haltbarkeits- und Zuverlässigkeitseinschränkungen durch die Verwendung von Polymeren.

Mit dem Anspruch durch digitale Fertigung ein funktionierendes optisches System und nicht nur eine einzelne Komponente (wie eine Linse) zu erzeugen, fehlt außerdem die Integration von Blenden aus absorbierenden Materialien oder sogar weiteren Funktionselementen wie Spiegeln.

Blenden bzw. absorbierende Strukturen werden üblicherweise als optomechanische Bauteile in das gesamte optische System eingefügt. Eine nachträgliche ggf. additive/digitale Integration von Blendenstrukturen ist nach dem Stand der Technik bei der klassischen Optikfertigung nicht vorgesehen. Beschrieben wird allerdings eine 3D-Volumenstrukturierung von optischen Gläsern oder Polymerblöcken, die durch Laserprozesse im Volumen der Komponente ausgelöst wird. Es handelt sich hierbei um eine Bildung von Mikrorissen oder auch eine gezielte - und ggf. durch Materialmodifikationen begünstigte - lokale Schwärzung. Typischerweise erfolgen diese Modifikationen aber nicht im Anwendungsbereich optischer Systeme und insbesondere nicht in 3D-gedruckten optischen Elementen.

Eine 3D-Formgebung von Optiken mit digitalen Prozessen ist nach aktuellem Stand der Technik auf wenige Arten möglich:
**1. Selektives Laserätzen:**
   Hierbei wird typischerweise Quarzglas mit Femtosekunden-Laserpulsen belichtet und somit im Fokalbereich des Brennpunkts die Ätzrate gegenüber HF oder KOH erhöht. Nach der punktweisen Belichtung einer 3D Struktur erfolgt dann der Ätzschritt, nach dem die gewünschte 3D Struktur als Negativ des belichteten Bereichs verbleibt (subtraktiver Prozess). Die Genauigkeit und Rauheit des Prozesses reichen allerdings nicht aus, um optische Komponenten zu fertigen.
**2. 3D-Druck:**
   3D-Duck von Kompositen bestehend aus Partikeln (z.B. mit Silica) und organischen Matrixmaterialien und anschließende Sinterung d.h. thermische Zersetzung des Matrixmaterials. Hiermit lassen sich glasähnliche Komponenten additiv fertigen. Analog zu Ätzprozessen reicht die Qualität der Komponenten insbesondere aufgrund der Schrumpfung im Sinterprozess nicht für optische Anwendungen aus.
**3. Laserstrukturieren und -polieren:**
   Abtrag, Feinstabtrag, Polieren mittels CO₂-Laserstrahlung
**4. Abrasive Laserbehandlung:**
   Beschrieben ist die Laserbehandlung durch Abtrag für transmittive Optiken auch für Acrylate (DE 10-2017002986 A1)

S. Suresh Nair et al. ("Additive Manufacturing of Functional (Photoluminescent) Optical Components", 119. DGAO TAGUNG, 20. Juli 2018) offenbaren ein Verfahren zur Herstellung eines optischen Elements, das ein anorganisch-organischen Hybridpolymer und Quantenpunkte enthält.

Ausgehend hiervon war es Aufgabe der vorliegenden Erfindung, ein Verfahren zur digitalen Erzeugung eines optischen Elements mit integrierten Funktionalitäten bereitzustellen, das die Nachteile im Stand der Technik überwindet und ein optisches Element mit hoher Komplexität bei verbesserten optischen Eigenschaften ermöglicht.

Diese Aufgabe wird durch das Verfahren mit den Merkmalen des Anspruchs 1 und das optische Element mit den Merkmalen des Anspruchs 11 gelöst. Die weiteren abhängigen Ansprüche zeigen vorteilhafte Weiterbildungen auf.

Erfindungsgemäß wird ein Verfahren zur digitalen Erzeugung eines optischen Elements mit integrierten Funktionalitäten bereitgestellt, bei dem
a) eine dreidimensionale Struktur aus einem anorganisch-organischen Hybridpolymer enthaltenden Druckmaterial mittels 3D-Druck erzeugt wird und
b) in der dreidimensionalen Struktur durch eine bereichsweise Modifikation auf der Oberfläche und/oder im Volumen der Struktur mindestens ein Bereich mit einer zusätzlichen Funktionalität erzeugt wird,
dadurch gekennzeichnet, dass die zusätzliche Funktionalität ausgewählt ist aus der Gruppe bestehend aus Licht-brechenden Elementen.

Die im Stand der Technik bekannten Herausforderungen werden gemäß der vorliegenden Erfindung durch eine gezielte Wahl von additiven und digitalen Prozessen in Kombination mit geeigneten Materialien gelöst. Zunächst wird ein optisches Element als dreidimensionale Struktur mittels 3D-Druck, z.B. durch Inkjet-Druck, Stereolithographie oder digitale Lichtverarbeitungs-Technologie (engl. Digital Light Processing, DLP) erzeugt, um die Anzahl der brechenden Flächen im Rahmen eines Freiformansatzes zu reduzieren. Dies erlaubt prinzipiell die Generation von Lichtfeldverteilungen, die mit konventionellen Optiken nicht möglich sind und vereinfacht die Komplexität und damit nachgelagert die Montage und Justierung des optischen Systems erheblich.

Die zusätzliche Funktionalität ist erfindungsgemäß ausgewählt aus Licht-brechenden Elementen. Wird in der dreidimensionalen Struktur durch eine bereichsweise Modifikation auf der Oberfläche und/oder im Volumen der Struktur mindestens ein weiterer Bereich mit einer zusätzlichen Funktionalität erzeugt, ist die zusätzliche Funktionalität des weiteren Bereichs ausgewählt aus der Gruppe bestehend aus Licht-absorbierenden Elementen, Lichtreflektierenden Elementen, Licht-streuenden Elementen und elektrischen Funktionalitäten.

Anders als im Stand der Technik wird ein Licht-härtendes, also photochemisch vernetzbares, anorganisch-organisches Hybridpolymer (ORMOCER) statt eines rein organischen Polymers als Druckmaterial verwendet. Dieses verfügt über einen anorganischen Anteil, der bessere optische Eigenschaften sowie eine erhöhte Stabilität gegenüber Temperatureinflüssen und anderen Alterungserscheinungen insbesondere Vergilbung bewirkt. Zudem kann die Materialklasse der anorganisch-organischen Hybridpolymere im Hinblick auf die Druckparameter und die Eigenschaften des Bauteils angepasst werden, so dass die Eigenschaften der gedruckten Optik im Allgemeinen gegenüber dem Stand der Technik erheblich verbessert werden können. Dies betrifft beispielsweise die Reduktion von Lagengrenzen durch eine Anpassung der Photochemie, eine glattere Oberfläche durch materialimmanente selbstglättende Effekte und eine erhöhte Transmission im sichtbaren Spektralbereich.

Es ist bevorzugt, dass das anorganisch-organische Hybridpolymer durch Hydrolyse und Polykondensation von einem oder mehreren Alkoxy- oder Hydroxysilanen der allgemeinen Formel I hergestellt wird:

RₓSi(OR')₄₋ₓ (I)

mit
- R=: organische Gruppe; ausgewählt aus C1- C8, insbesondere Methyl, Ethyl, Isopropyl, Tert.-butyl, Cyclohexyl, Phenyl, und ggf. funktionalisiert, insbesondere mit Vinyl, Allyl, Glycidyloxypropyl, [2-(3,4-Epoxycyclohexyl)ethyl]trimethoxy-silan, (Meth-)Acryloxypropyl, Styryl, Thiolenen, Norbonen,
- R' =: H, C1-Cx-Alkyl, insbesondere Methyl oder Ethyl,

Dabei kann das Silicium zumindest teilweise durch Zirkonium und/oder Titan ersetzt sein.

Die verwendeten anorganisch-organischen Hybridpolymere werden durch eine Hydrolyse und anschließender Kondensation von Alkoxysilanen als Precursoren hergestellt. Hierbei entsteht ein anorganisches Rückgrat aus Si-O-Einheiten, an das kovalent organische funktionelle Gruppen gebunden sind. Zu diesen gehören im Fall von 3D-druckbaren anorganisch-organischen Hybridpolymere UV-vernetzbare Gruppen, insbesondere Acrylate und Methacrylate. Bei derartigen Hybridpolymeren handelt es sich üblicherweise um Photoresiste, die typischerweise in dünnen Sichten von mehreren Mikrometern aufgetragen und (mikro)strukturiert werden. Der lagenweise Aufbau im 3D-Druck Prozess erlaubt es, diese Materialien zu Volumenkörpern zu verarbeiten.

Eine bevorzugte Ausführungsform sieht vor, dass das Druckmaterial
- Partikel mit hoher Brechzahl, bevorzugt Zirkonoxid oder Titanoxid, oder Nanopartikel zur Erhöhung der Laserabsorption
- streuende Partikel,
- Partikel zur Einstellung der Wärmeleitfähigkeit, der Dispersion, der thermische Ausdehnung
- Partikel als Label oder
- Kombinationen hiervon;
enthält.

Bevorzugt werden als funktionale Partikel Nanopartikel, d.h. Partikel mit einer maximalen Partikeldurchmesser von bis zu 1000 nm verwendet.

Vorzugsweise erfolgt der 3D-Druck mittels Inkjet-Druckverfahren, Stereolithographie oder digitaler Lichtverarbeitungs-Technologie (DLP).

Bei der Erzeugung der dreidimensionalen Struktur mittels Inkjet-Druckverfahren werden bevorzugt folgende Verfahrensschritte durchgeführt:
(1) Ausstoßen einer Vielzahl von Tröpfchen des das anorganisch-organische Hybridpolymer enthaltenden Druckmaterials in Richtung eines Substrats, wobei die Tröpfchen nebeneinander abgeschieden werden zur Ausbildung einer Lage,
(2) Photochemisches Aushärten der Vielzahl von Tröpfchen in der Lage mittels Bestrahlung, bevorzugt UV-Strahlung oder blauer LED-Beleuchtung.

Die Schritte (1) und (2) werden dabei bis zum Aufbau der gewünschten dreidimensionalen Struktur wiederholt.

Alternativ ist auch die lagenweise Herstellung der Außenkontur des 3D Körpers durch Ausstoßen einer Vielzahl von Tröpfchen mit lagenweiser photochemischer Aushärtung der Außenkontur Teil der Erfindung. Hier wird das Volumen der Struktur anschließend mit dem anorganisch-organischen Hybridpolymer geflutet und erneut belichtet.

Die Wahl der verwendeten anorganisch-organischen Hybridpolymere erfolgt zum einen derart, dass die oben genannten Bauteileigenschaften realisierbar sind und zum anderen in Abstimmung mit dem jeweiligen Druckprozess. Im Allgemeinen lässt sich nicht jedes anorganisch-organische Hybridpolymer mittels 3D-Druck zu einem Grundkörper verarbeiten. Es muss beispielsweise für den Inkjet-Druck durch die Syntheseführung (Wahl der Precusoren) oder die Zugabe von Reaktivverdünnern hinsichtlich seiner Viskosität angepasst werden, so dass diese vorzugsweise von 10 bis 50 mPas bei Raumtemperatur beträgt. Ein geeigneter Reaktivverdünner, also ein im Druckprozess mitvernetzendes Molekül kann z.B. DDDMA (Dodecanediol Dimethacrylate) oder Ethylmethacrylat (EMA) sein. Zudem muss das anorganisch-organische Hybridpolymer photochemisch aushärtbar sein und sich für die Prozessierung in dicken Schichten (entsprechend dem Lagenabstand im Druckprozess) eignen.

Überraschenderweise können durch die lageweise Herstellung des Bauteils mit Hybridpolymeren bestimmter Ausführungstypen makroskopische Körper aufgebaut werden, bei denen mit anderen Herstellungsverfahren durch den internen Materialstress Rissbildungen Versprödungen auftreten können.

Eine weitere erfindungsgemäße Ausführungsform sieht vor, dass bei der Erzeugung der dreidimensionalen Struktur mittels Stereolithographie folgende Verfahrensschritte durchgeführt werden:
(1) Bereitstellen des Druckmaterials auf einer Trägerstruktur in einem Bad
(2) Lagenweise Belichtung des Druckmaterials mit einer gerasterten fokussierten (UV)-Lichtquelle durch den Boden des Bades unter Aushärtung einer Lage,
(3) Bewegung der Trägerstruktur mit der gebildeten Lage des Druckmaterials, so dass eine folgende Lage des Druckmaterials auf der gebildeten Lage belichtet wird,
wobei die Schritte (2) bis (3) bis zum Aufbau der gewünschten dreidimensionalen Struktur wiederholt werden.

Eine weitere erfindungsgemäße Ausführungsform sieht vor, dass bei der Erzeugung der dreidimensionalen Struktur mittels digitaler Lichtverarbeitungs-Technologie (DLP) folgende Verfahrensschritte durchgeführt werden:
(1) Bereitstellen des Druckmaterials auf einer Trägerstruktur in einem Bad
(2) Lagenweise Belichtung des Druckmaterials mit einer Lichtquelle mit einem Raumlichtmodulator durch den Boden des Bades unter Aushärtung einer Lage,
(3) Bewegung der Trägerstruktur mit der gebildeten Lage des Druckmaterials, so dass eine folgende Lage des Druckmaterials auf der gebildeten Lage belichtet wird,
wobei die Schritte (2) bis (3) bis zum Aufbau der gewünschten dreidimensionalen Struktur wiederholt werden.

Es ist bevorzugt, dass die bereichsweise Modifikation im Volumen durch eine Ausstrahlung und Fokussierung von Laserstrahlung mit ultrakurzen Laserpulsen < 10 ps auf den zu modifizierenden Bereich erfolgt, wobei durch die ultrakurzen Laserpulse die bereichsweise Modifikation an der Oberfläche und/oder im Volumen der Struktur erfolgt. Die Laserpulse weisen bevorzugt eine Pulswiederholrate von 1 bis 500 kHz und/oder eine Pulsenergie von 10 bis 3000 nJ auf. Die Laserwellenlänge liegt bevorzugt im Bereich von 300 bis 2200 nm. Der Laserstrahldurchmesser im Fokus liegt vorzugsweise im Bereich von < 30 µm.

Durch die ultrakurzen Laserpulse kann bevorzugt eine Karbonisierung der organischen Bestandteile des anorganisch-organischen Hybridpolymers erfolgen, durch die der zu modifizierende Bereich geschwärzt und/oder elektrisch leitfähig wird.

Neben den bereits verbesserten Eigenschaften der gedruckten optischen Komponenten ist durch die Wahl von geeigneten anorganisch-organischen Hybridpolymeren als Druckmaterial die Integration von weiteren Funktionalitäten möglich, so dass ein optisches System durch digitale Prozesse kreiert werden kann. Eine konkrete Funktionalität ist das Erzeugen von absorbierenden Strukturen im Volumen des gedruckten Körpers durch die Wechselwirkung des Druckmaterials mit Laserstrahlung. Dafür wird ein Laser durch ein optisches System in den Körper fokussiert. Die Wechselwirkung im Volumen erfolgt durch nichtlineare Absorptionsprozesse ultrakurzer Laserpulse, die wiederum mikroskopische Materialmodifikation des Druckmaterials bewirken. Durch die verwendete Fokussieroptik und die verwendeten Laserparameter lässt sich die geometrische Ausprägung dieser Modifikation manipulieren, wobei die durch einen Einzelpuls ausgelöste Modifikation von dem Abstand des Fokus im Material zur Probenoberfläche abhängig ist. Eine Kombination mehrerer durch Einzelpulse ausgelöster Modifikationen in konstanter Bearbeitungstiefe unter der Probenoberfläche erlaubt folgerichtig eine makroskopische Materialmodifikation des Druckmaterials. Dies kann ebenso in unterschiedlichen Bearbeitungstiefen unter der Probenoberfläche erfolgen, was im Hinblick auf eine homogene makroskopische Materialmodifikation allerdings eine tiefenangepasste Laserprozesssteuerung erfordert. Im Sinne der absorbierenden Strukturen zum Vermeiden von Geisterbildern und ungewollten Reflexionen kann es sich bei den laserinduzierten Materialmodifikationen konkret um eine Karbonisierung, d.h. eine Zersetzung von organischen ORMOCER^{®}-Bestandteilen handeln, die im Volumen als breitbandig absorbierende (= dunkle) Struktur erscheint. Durch Anpassung der Prozessparameter und/oder ein mehrfaches Auslösen der Modifikationen - entweder an gleicher Stelle oder in eng benachbarten Regionen - lässt sich die Gesamtabsorption/Transmission durch den makroskopisch bearbeiteten Bereich definiert einstellen.

Eine Zugabe von Nanopartikeln zur Modifikation des Absorptionsverhaltens im Volumenkörper und damit zur besseren Kontrolle der Laser-induzierten Wechselwirkung zur Schwärzung von digital festgelegten Bereichen ist ebenfalls denkbar. Dieser Materialtechnologische Ansatz erlaubt ferner die Anpassung der Brechzahl des Druckmaterials.

Das Auslösen einer laser-induzierten Karbonisierung hat außerdem den Vorteil, dass die modifizierten Bereiche elektrisch leitfähig sind. Dies ermöglicht folglich nicht nur die Integration von Licht-absorbierenden Strukturen, sondern auch das nachträgliche Integrieren von elektrischen Leiterbahnen z.B. zur Kontaktierung von integrierten elektrooptischen Komponenten, Heizelementen oder Sensoren.

Bei der bereichsweisen Modifikation der dreidimensionalen Struktur handelt es sich vorzugsweise um den folgenden Schritt:
Erzeugung eines achromatischen Elements mittels Inkjet-Druckverfahren, indem während des Inkjet-Druckverfahrens das erste Druckmaterial zumindest zeitweise durch ein weiteres Druckmaterial ersetzt wird, das eine vom ersten Druckmaterial sich unterscheidende Brechzahl aufweist.

Wird mindestens ein weiterer Bereich mit einer zusätzlichen Funktionalität erzeugt, handelt es sich bei der Modifikation der dreidimensionalen Struktur vorzugsweise um mindestens einen der folgenden Schritte:
- Erzeugung von Licht absorbierenden und/oder reflektierenden und/oder streuenden Elementen auf der Oberfläche und/oder im Volumen der Struktur mittels Laserstrahlung
- Entspiegelung der Oberfläche der Struktur mittels Plasmaätzen
- Erzeugung eines spiegelnden Elementes mittels Inkjet-Druckverfahren und anschließender thermischer Nachbehandlung und/oder photonischer Nachbehandlung, z.B. Blitzlampenbeleuchtung oder Lasernachbehandlung, wobei das Druckverfahren bevorzugt unter Verwendung von metallischen (Nano)partikeln, besonders bevorzugt Silber-(nano)partikeln durchgeführt wird.

Erfindungsgemäß wird ebenso ein optisches Element bereitgestellt, das eine mittels 3D-Druck aus einem anorganisch-organischen Hybridpolymer hergestellte dreidimensionale Struktur enthält, wobei die Struktur auf der Oberfläche und/oder im Volumen mindestens einen Bereich mit einer zusätzlichen Funktionalität aufweist, dadurch gekennzeichnet, dass die zusätzliche Funktionalität ausgewählt ist aus der Gruppe bestehend aus Licht-brechenden Elementen.

Erfindungsgemäß ist die zusätzliche Funktionalität ausgewählt aus Licht-brechenden Elementen. Weist die Struktur auf der Oberfläche und/oder im Volumen mindestens einen weiteren Bereich mit einer zusätzlichen Funktionalität auf, ist die zusätzliche Funktionalität des weiteren Bereichs ausgewählt aus der Gruppe bestehend aus Licht-absorbierenden Elementen, Lichtreflektierenden Elementen, Licht-streuenden Elementen und elektrischen Funktionalitäten.

Es ist bevorzugt, dass die zusätzliche Funktionalität der dreidimensionalen Struktur ein achromatisches Element an der Oberfläche und/oder im Volumen der Struktur ist.

Weist die Struktur auf der Oberfläche und/oder im Volumen mindestens einen weiterer Bereich mit einer zusätzlichen Funktionalität auf, ist bevorzugt, dass die zusätzliche Funktionalität der dreidimensionalen Struktur ausgewählt ist aus
- eine spiegelnde Oberfläche der Struktur, insbesondere gebildet aus metallischen (Nano)partikeln bevorzugt Silber-(Nano)partikeln
- eine Entspiegelung an der Oberfläche des optischen Elements durch Plasmaätzen
- eine Licht streuendes Element an der Oberfläche und/oder im Volumen der Struktur
- ein Licht absorbierendes Element, insbesondere eine Aperturblende, an der Oberfläche und/oder im Volumen der Struktur und
- Kombinationen hiervon.

Die grundlegende Herangehensweise ein optisches System aus anorganisch-organischen Hybridpolymeren durch 3D-Druck in Kombination mit anderen digitalen Prozessen zu fertigen, erlaubt die Integration von noch viel komplexeren Funktionalitäten. Sofern das Druckmaterial kompatibel zu weiteren Funktionsmaterialien sowie Prozessen ist - und dies lässt sich durch die Chemie bewerkstelligen - können entweder im Druckprozess zwischen den einzelnen Drucklagen oder nach der Fertigstellung des gedruckten Körpers weitere Funktionalitäten realisiert werden.

Insgesamt leiten sich die Vorteile der Herangehensweise zum einen konkret aus den Vorteilen der 3D-gedruckten Optiken ab. Zum anderen resultieren weitere signifikante Vorteile aus der Integration von Funktionen, die aus der Wahl des Druckmaterials und der Prozessführung (3D-Druck, Laserprozess) resultieren. Diese Vorteile umfassen:
- Weniger Gewicht und Volumen
- Geringere Kosten
- Erheblich verbesserte Materialeigenschaften im Vergleich zu reinen Polymer-basierten Druckmaterialien (Temperaturstabilität, Vergilbung, ...)
- Verbesserte Zuverlässigkeit
- Völlige Designfreiheit bezüglich der refraktiven Oberfläche(n) und den integrierten Absorberstrukturen/Baffles
- Keine Geisterbilder oder/und ungewollte Reflexe
- Deutlich erhöhte Funktionsdichte und weitere Funktionen, die bisher in optischen System nur sehr schwer oder ggf. gar nicht zu integrieren waren (z.B. Spiegel, Absorberstrukturen)
- Verbesserte optische Eigenschaften: Verringerte (Brechung/Streuung an) Lagengrenzen, geringe Oberflächenrauigkeiten, AR-Schichten ohne zusätzliches Auftragen von Schichten
- Design bis Losgröße 1 ohne Werkzeuganpassung

Anhand der nachfolgenden Figuren und des Beispiels soll der erfindungsgemäße Gegenstand näher erläutert werden, ohne diesen auf die hier gezeigten spezifischen Ausführungsformen einschränken zu wollen.

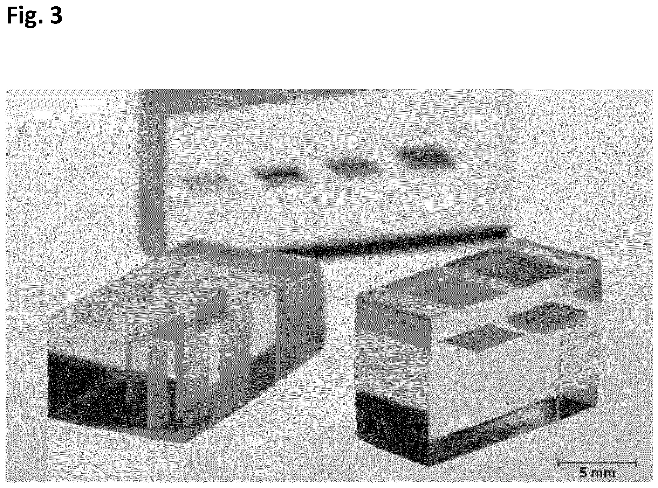

Von den folgenden Ausgestaltungsformen stellt die Figur 3 keine Ausgestaltungsform gemäß der Erfindung dar, ist jedoch hilfreich, um bestimmte Aspekte der Erfindung zu verstehen.
- Fig.1: zeigt eine fotografische Aufnahme eines erfindungsgemäßen optischen Elements

- Fig. 2: zeigt ein Transmissionsspektrum eines erfindungsgemäßen optischen Elements im Vergleich zu Quarzglas und PMMA
- Fig. 3: zeigt eine fotographische Aufnahme von optischen Elementen mit integrierten funktionalen Bereichen (absorbierende Strukturen)

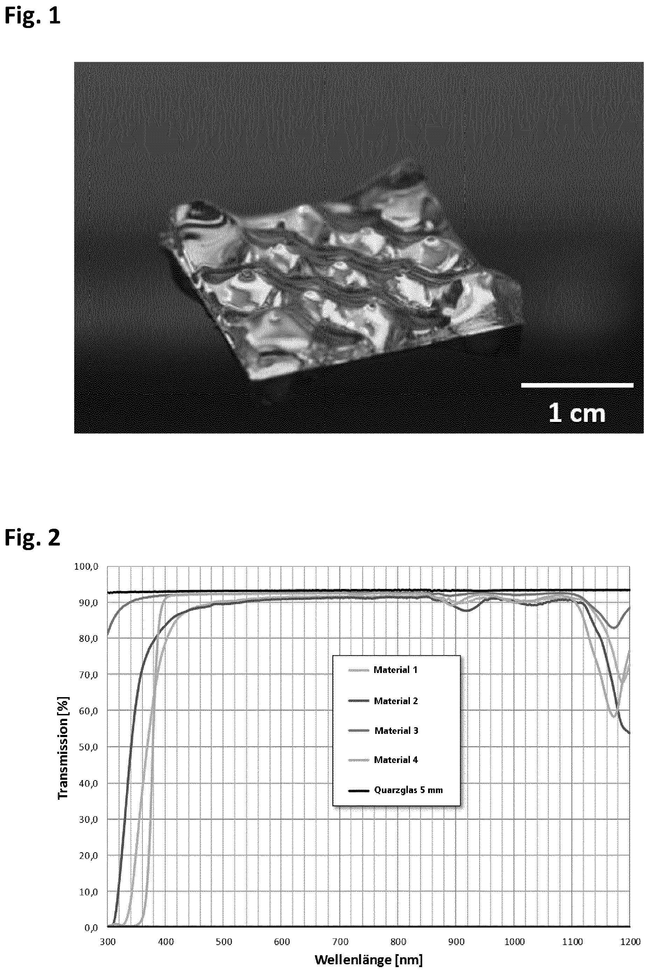

In Fig. 1 ist eine fotografische Aufnahme eines erfindungsgemäßen optischen Elements aus einem anorganisch-organischen Hybridpolymer (ORMOCER). Aus der Aufnahme ist zu erkennen, dass das optische Element eine hohe Transparenz aufweist und zudem keine Vergilbung des Materials festzustellen ist. Ferner handelt es sich bei der obenliegenden Oberfläche um eine Freiform.

In Fig. 2 ist ein Transmissionsspektrum von erfindungsgemäßen optischen Elementen dargestellt. Die Messung erfolgte an einer 3D-gedruckten planparallelen Platte mit einer Dicke von 3 mm (Material 1: kommerziell erhältliches ORMOCER; Material 2: modifiziertes ORMOCER mit DDDMA). Das Spektrum zeigt als Referenz die Transmission einer PMMA-Platte mit einer Stärke von 1 mm (Material 3) und 5 mm (Material 4) sowie als Referenz für ein rein anorganisches Material die Transmission von Quarzglas. Die Daten belegen, dass eine ähnlich hohe Transmission der 3D-gedruckten Körper im Wellenlängenbereich von 400 bis 1100 nm wie bei den klassisch prozessierten Materialien gegeben ist. Dies zeigt die hohe optische Qualität im Hinblick auf Transmission (Vermeidung von streuenden/brechenden Lagengrenzen) bei Verwendung eines geeigneten ORMOCERs im 3D-Druckprozess (hier: Inkjet).

In Fig. 3 ist eine fotographische Aufnahme von optischen Elementen mit integrierten funktionellen Bereichen. In dem linken optischen Element sind hierbei vertikale Absorberstrukturen integriert, im rechten optischen Elemente sind horizontale Absorberstrukturen integriert, die als graue Bereiche erkennbar sind.

### Beispiel

Es werden 3-(Trimethoxysilyl)propylmethacrylat, Diphenyldimethoxysilan und Methoxytrimetylsilan im molaren Verhältnis von 1:1:1,75 in einer sauren Hydrolyse/Kondensationsreaktion mit Hilfe von HCl umgesetzt. Nach Aufarbeitung wird das erhaltene Harz mit Dodecandioldimethacrylat auf eine Viskosität von 40 mPas eingestellt und mit einem geeigneten Photoinitiator versetzt.

Diese Materialformulierung wird dann mittels Inkjet-Verfahren zu einem 3-dimensionalen Grundkörper verdruckt. Dies erfolgt lagenweise mit einer Lagendicke von 10 µm, wobei die jeweils gedruckte Schicht nach dem eigentlichen Druckprozess mittels UV-LEDs (Wellenlänge: 405 nm) für 2 s belichtet, d.h. gehärtet wird und anschließend der Druckkopf mit dem Hybridpolymer um den Lagenabstand vom Träger entfernt wird. Durch mehrfache Wiederholung von Druck (gemäß aktuellen Lage nach dem Computermodell des Grundkörpers), Belichtung und Entfernen des Trägers entsteht so die 3-dimensionale Struktur. Diese weist typischerweise eine Transparenz > 90% im sichtbaren Spektralbereich für eine Gesamtdicke von 1 mm auf.

Zur laserinduzierten Erzeugung von Modifikationen im Volumen der Struktur wird diese anschließend in eine Laserschreibanlage eingebracht. Dort wird ein Ultrakurzpulslaser (Wellenlänge 1030 nm) mit einem Fokusdurchmesser von 1.6 µm, einer Pulsdauer zwischen 0,35 und 1.5 ps sowie einer Pulswiederholrate zwischen 1 und 500 kHz in das Volumen mit einer numerischen Apertur von 0.4 fokussiert. Entsprechend der digitalen Daten, die die zu erzeugende Volumenmodifikation repräsentieren, wird der Laserfokus dann entlang verschiedener Trajektorien (in XY-Richtung oder auch in YZ- oder XZ-Richtung) durch den 3D-gedruckten Körper mit einer Pulsenergie zwischen 10 und 3000 nJ geführt. Im Sinne der absorbierenden Strukturen zum Vermeiden von Geisterbildern und ungewollten Reflexen kann es sich bei den laserinduzierten Materialmodifikationen konkret um eine Karbonisierung, d.h. eine Zersetzung von organischen Hybridpolymer-Bestandteilen handeln, die im Volumen als breitbandig absorbierende (= dunkle) Struktur erscheint. Leichtere Modifikationen des Materials unterhalb der Karbonisierungsschwelle werden genutzt, um Licht brechende oder streuende Strukturen einzubringen.

Der so hergestellte Formkörper enthält in einer erfindungsgemäßen Ausgestaltungsform weitere Funktionen. So ist ein weiterer 3D-Druck Prozess mit einem anderen Hybridpolymer abweichender Abbe-Zahl auf diesen Formkörper erfindungsgemäß. Die Herstellung erfolgt dabei grundsätzlich mit vergleichbaren experimentellen Bedingungen hinsichtlich Bestrahlungswellenlänge, -Dauer und Lagenabstand. Die Kombination zweier Materialien mit unterschiedlicher Abbe-Zahl ist in der Optik bekannt und ermöglicht die Herstellung von farbkorrigierten Optiken.

Weiterhin kann der Druckprozess mit dem Hybridpolymer unterbrochen werden, um eine Tinte mit Silber-Nanopartikeln in einer oder mehreren Ebenen zu drucken. Zur Ausbildung einer reflektiven Schicht ist eine Sinterung der verdruckten Nanopartikel notwendig, was im einfachsten Fall im Ofen bei einer Temperatur von 200 °C und einer Dauer von 30 min erfolgt.

Alternativ wird die Sinterung mittels Laserstrahlung durchgeführt: Dabei wird die gedruckte Schicht mittels Laserstrahlung beaufschlagt, welche an den Partikeln absorbiert und in Wärme umgewandelt wird. Dies führt zu einem Sintern der Partikel. Eingesetzt werden kontinuierlich emittierende oder gepulste Lasersysteme mit Pulslängen > 1ns bei Laserwellenlängen zwischen 200 und 3.500 nm sowie 9.000 und 11.000 nm. Entweder wird das Substrat unter dem feststehenden Laserstrahl bewegt, die gedruckte Fläche vollständig ohne Bewegung des Substrats oder Laserstrahls bearbeitet und/oder der Laserstrahl über das stehende Substrat bewegt. Eine Kombination ist möglich, z.B. bewegtes Substrat und bewegter Laserstrahl. Im konkreten Beispiel wird die Lasersinterung mittels Faserlaser (Emissionswellenlänge 1070 nm, Dauerstrich, Leistung 32,7 W) durchgeführt, wobei ein fokussierter Laserstrahl (Brennweite der Fokussierungsoptik 254 mm, Spotdurchmesser im Fokus 860 µm) die Schicht aus Nanopartikeln mäanderförmig abrastert (Scangeschwindigkeit 4000 mm/s mit Spurabstand 50 µm).

Um die ausgebildeten refraktiven Oberflächen des gedruckten optischen Elements zu entspiegeln, kann Plasmaätzen eingesetzt werden. Dabei wirkt ein Ar/O₂-Plasma für eine Dauer von 500 s auf die Oberfläche des Elements ein, so dass poröse Strukturen mit einer Porengröße zwischen 10 und 150 nm und einer Tiefe von 50 - 200 nm entstehen. Diese so genannten Mottenaugen führen zu einer breitbandigen Verminderung von Reflexen einer Oberfläche um 4 %.

## Patentansprüche

1. Verfahren zur digitalen Erzeugung eines optischen Elements mit integrierten Funktionalitäten, bei dem
a) eine dreidimensionale Struktur aus einem anorganisch-organischen Hybridpolymer enthaltenden Druckmaterial mittels 3D-Druck erzeugt wird,
b) in der dreidimensionalen Struktur durch eine bereichsweise Modifikation auf der Oberfläche und/oder im Volumen der Struktur mindestens ein Bereich mit einer zusätzlichen Funktionalität erzeugt wird,
**dadurch gekennzeichnet, dass** die zusätzliche Funktionalität ausgewählt ist aus der Gruppe bestehend aus Licht-brechenden Elementen.

2. Verfahren nach Anspruch 1, **dadurch gekennzeichnet, dass** in der dreidimensionalen Struktur durch eine bereichsweise Modifikation auf der Oberfläche und/oder im Volumen der Struktur mindestens ein weiterer Bereich mit einer zusätzlichen Funktionalität erzeugt wird, wobei die zusätzliche Funktionalität des weiteren Bereichs ausgewählt ist aus der Gruppe bestehend aus Licht-absorbierenden Elementen, Licht-reflektierenden Elementen, Licht-streuenden Elementen und elektrischen Funktionalitäten.

3. Verfahren nach einem der vorhergehenden Ansprüche, **dadurch gekennzeichnet, dass** das anorganisch-organische Hybridpolymer durch Hydrolyse- und Poly-Kondensationsreaktionen von mindestens einem Alkoxy- oder Hydroxysilanen der allgemeinen Formel I hergestellt wird:
RₓSi(OR')₄₋ₓ (I)
mit
R = organische Gruppe; ausgewählt aus C1- C8, insbesondere Methyl, Ethyl, Isopropyl, Tert.-butyl, Cyclohexyl, Phenyl, und ggf. funktionalisiert, insbesondere mit Vinyl, Allyl, Glycidyloxypropyl, [2-(3,4-Epoxycyclohexyl)ethyl]trimethoxy-silan, (Meth-)Acryloxypropyl, Styryl, Thiolenen, Norbonen,
R' = H, C1-C8-Alkyl, insbesondere Methyl oder Ethyl,
wobei Si zumindest teilweise durch Zirkonium und/oder Titan ersetzt sein kann.

4. Verfahren nach einem der vorhergehenden Ansprüche, **dadurch gekennzeichnet, dass** das Druckmaterial
• Partikel mit hoher Brechzahl, bevorzugt Zirkonoxid oder Titanoxid, oder Nanopartikel zur Erhöhung der Laserabsorption,
• streuende Partikel,
• Partikel zur Einstellung der Wärmeleitfähigkeit, der Dispersion, der thermische Ausdehnung,
• Partikel als Label, oder
• Kombinationen hiervon;
enthält.

5. Verfahren nach einem der vorhergehenden Ansprüche, **dadurch gekennzeichnet, dass** der 3D-Druck mittels Inkjet-Druckverfahren, Stereolithographie oder digitaler Lichtverarbeitungs-Technologie (DLP) erfolgt.

6. Verfahren nach dem vorhergehenden Anspruch, **dadurch gekennzeichnet, dass** bei der Erzeugung der dreidimensionalen Struktur mittels Inkjet-Druckverfahren folgende Verfahrensschritte durchgeführt werden:
(1) Ausstoßen einer Vielzahl von Tröpfchen des das anorganisch-organische Hybridpolymer enthaltenden Druckmaterials in Richtung eines Substrats, wobei die Tröpfchen nebeneinander zur Ausbildung einer Lage abgeschieden werden.
(2) Photochemisches Aushärten der Vielzahl von Tröpfchen in der Lage mittels Bestrahlung, bevorzugt UV-Strahlung oder blauer LED-Beleuchtung,
wobei die Schritte (1) und (2) bis zum Aufbau der gewünschten dreidimensionalen Struktur wiederholt werden, wobei die Viskosität des Druckmaterials bevorzugt mit einem Reaktivverdünner, insbesondere Dodecandiol-dimethacrylat oder Ethylmethacrylat, im Bereich von 10 bis 50 mPas eingestellt wird.

7. Verfahren nach Anspruch 5, **dadurch gekennzeichnet, dass** bei der Erzeugung der dreidimensionalen Struktur mittels Stereolithographie folgende Verfahrensschritte durchgeführt werden:
(1) Bereitstellen des Druckmaterials auf einer Trägerstruktur in einem Bad
(2) Lagenweise Belichtung des Druckmaterials mit einer gerasterten fokussierten (UV)-Lichtquelle durch den Boden des Bades unter Aushärtung einer Lage,
(3) Bewegung der Trägerstruktur mit der gebildeten Lage des Druckmaterials, so dass eine folgende Lage des Druckmaterials auf der gebildeten Lage belichtet wird,
wobei die Schritte (2) bis (3) bis zum Aufbau der gewünschten dreidimensionalen Struktur wiederholt werden.

8. Verfahren nach Anspruch 5, **dadurch gekennzeichnet, dass** bei der Erzeugung der dreidimensionalen Struktur mittels digitaler Lichtverarbeitungs-Technologie (DLP) folgende Verfahrensschritte durchgeführt werden:
(1) Bereitstellen des Druckmaterials auf einer Trägerstruktur in einem Bad
(2) Lagenweise Belichtung des Druckmaterials mit einer Lichtquelle mit einem Raumlichtmodulator durch den Boden des Bades unter Aushärtung einer Lage,
(3) Bewegung der Trägerstruktur mit der gebildeten Lage des Druckmaterials, so dass eine folgende Lage des Druckmaterials auf der gebildeten Lage belichtet wird,
wobei die Schritte (2) bis (3) bis zum Aufbau der gewünschten dreidimensionalen Struktur wiederholt werden.

9. Verfahren nach einem der vorhergehenden Ansprüche, **dadurch gekennzeichnet, dass** die bereichsweise Modifikation im Volumen durch eine Ausstrahlung und Fokussierung von Laserstrahlung mit ultrakurzen Laserpulsen mit einer Pulsdauer von < 10 ps auf den zu modifizierenden Bereich erfolgt, wobei durch die ultrakurzen Laserpulse die bereichsweise Modifikation an der Oberfläche und/oder im Volumen der Struktur erfolgt, wobei insbesondere durch die ultrakurzen Laserpulse eine Karbonisierung der organischen Bestandteile des anorganisch-organischen Hybridpolymers erfolgt, durch die der zu modifizierende Bereich geschwärzt und/oder elektrisch leitfähig wird, wobei die Laserpulse bevorzugt eine Pulswiederholrate von 1 bis 500 kHz und/oder eine Pulsenergien von 10 bis 3000 nJ aufweisen und/oder die Laserwellenlänge im Bereich von 300 bis 2200 nm liegt und/oder der Laserstrahldurchmesser im Fokus im Bereich von < 30 µm liegt.

10. Verfahren nach einem der vorhergehenden Ansprüche, **dadurch gekennzeichnet, dass** die bereichsweise Modifikation durch den folgenden Schritt erfolgt:
Erzeugung eines achromatischen Elements mittels Inkjet-Druckverfahren, indem während des Inkjet-Druckverfahrens das erste Druckmaterial zumindest zeitweise durch ein weiteres Druckmaterial ersetzt wird, das eine vom ersten Druckmaterial sich unterscheidende Brechzahl aufweist.

11. Optisches Element enthaltend eine mittels 3D-Druck aus einem anorganisch-organischen Hybridpolymer hergestellte dreidimensionale Struktur, wobei auf der Oberfläche und/oder im Volumen der Struktur mindestens ein Bereich mit einer zusätzlichen Funktionalität angeordnet ist,
**dadurch gekennzeichnet, dass** die zusätzliche Funktionalität ausgewählt ist aus der Gruppe bestehend aus Licht-brechenden Elementen.

12. Optisches Element nach Anspruch 11, **dadurch gekennzeichnet, dass** auf der Oberfläche und/oder im Volumen der Struktur mindestens ein weiterer Bereich mit einer zusätzlichen Funktionalität angeordnet ist, wobei die zusätzliche Funktionalität des weiteren Bereichs ausgewählt ist aus der Gruppe bestehend aus Licht absorbierende Strukturen, Licht-reflektierende Strukturen, Licht-streuende Strukturen und elektrischen Funktionalitäten.

13. Optisches Element nach einem der Ansprüche 11 oder 12, **dadurch gekennzeichnet, dass** das optische Element durch 3D-Druck, insbesondere durch Inkjet-Druckverfahren, Stereolithographie, digitaler Lichtverarbeitungs-Technologie (DLP), herstellbar ist.

14. Optisches Element nach einem der Ansprüche 11 bis 13, **dadurch gekennzeichnet, dass** das anorganisch-organische Hybridpolymer durch Hydrolyse- und Poly-Kondensationsreaktionen von mindestens einem Alkoxy- oder Hydroxysilanen der allgemeinen Formel I hergestellt wird:
RₓSi(OR')₄₋ₓ (I)
mit
R = organische Gruppe; ausgewählt aus C1 - C8, insbesondere Methyl, Ethyl, Isopropyl, Tert.-butyl, Cyclohexyl, Phenyl, und ggf. funktionalisiert, insbesondere mit Vinyl, Allyl, Glycidyloxypropyl, [2-(3,4-Epoxycyclohexyl)ethyl]trimethoxy-silan, (Meth-)Acryloxypropyl, Styryl, Thiolenen, Norbonen,
R' = H, C1-C8-Alkyl , insbesondere Methyl oder Ethyl,
wobei Si zumindest teilweise durch Zirkonium und/oder Titan ersetzt sein kann.

15. Optisches Element nach einem der Ansprüche 11 bis 14, **dadurch gekennzeichnet, dass** die Licht-brechenden Elemente durch eine Modifikation, insbesondere einer Karbonisierung, der organischen Bestandteile des anorganisch-organischen Hybridpolymers mittels ultrakurzen Laserpulsen herstellbar sind.

## Claims

1. A method for digitally generating an optical element with integrated functionalities, in which
a) a three-dimensional structure is generated from a printing material, which comprises an inorganic-organic hybrid polymer, via 3D printing,
b) in the three-dimensional structure, at least one region having an additional functionality is generated by modifying a region on the surface and/or in the volume of the structure,
**characterised in that** the additional functionality is selected from the group consisting of light-refracting elements.

2. A method according to claim 1, **characterised in that**, in the three-dimensional structure, at least one further region with an additional functionality is produced by a modification in regions of the surface and/or in the volume of the structure, wherein the additional functionality of the further region is selected from the group consisting of light-absorbing elements, light-reflecting elements, light-scattering elements, and electrical functionalities.

3. A method according to any of the preceding claims, **characterised in that** the inorganic-organic hybrid polymer is produced by hydrolysis and polycondensation reactions of at least one alkoxy- or hydroxysilane of the general formula I:
RₓSi(OR')₄₋ₓ (I)
where
R = organic group; selected from C1 - C8, in particular methyl, ethyl, isopropyl, tert-butyl, cyclohexyl, phenyl, and optionally functionalised, in particular with vinyl, allyl, glycidyloxypropyl, [2-(3,4-epoxycyclohexyl)ethyl] trimethoxysilane, (meth)acrylox-ypropyl, styryl, thiolenes, norbornylenes,
R' = H, C1-C8-alkyl, in particular methyl or ethyl,
wherein Si can be at least partially replaced by zirconium and/or titanium.

4. A method according to any one of the preceding claims, **characterised in that** the printing material comprises
• particles having a high refractive index, preferably zirconium oxide or titanium oxide, or nanoparticles for increasing laser absorption,
• scattering particles,
• particles to adjust the thermal conductivity, the dispersion, the thermal expansion,
• particles as a label or
• combinations thereof.

5. A method according to any of the preceding claims, **characterised in that** the 3D printing is carried out via an inkjet printing process, stereolithography or digital light processing technology (DLP).

6. A method according to the preceding claim, **characterised in that**, when generating the three-dimensional structure via an inkjet printing process, the following method steps are carried out:
(1) ejecting a plurality of droplets of the printing material, which comprises the inorganic-organic hybrid polymer, towards a substrate, the droplets being deposited next to one another to form a layer.
(2) Photochemical curing of the plurality of droplets in the layer via irradiation, preferably UV radiation or blue LED lighting,
wherein steps (1) and (2) are repeated until the desired three-dimensional structure is formed, the viscosity of the printing material preferably being adjusted with a reactive thinner, in particular dodecanediol dimethacrylate or ethyl methacrylate, to be in the range from 10 to 50 mPas.

7. A method according to claim 5, **characterised in that**, when generating the three-dimensional structure via stereolithography, the following method steps are carried out:
(1) providing the printing material on a support structure in a bath
(2) illuminating, layer by layer, the printing material with a rastered, focused (UV) light source through the bottom of the bath while curing a layer,
(3) moving the carrier structure with the formed layer of the printing material so that a subsequent layer of the printing material is illuminated on the formed layer,
steps (2) to (3) being repeated until the desired three-dimensional structure is formed.

8. A method according to claim 5, **characterised in that**, when generating the three-dimensional structure via digital light processing technology (DLP), the following method steps are carried out:
(1) providing the printing material on a support structure in a bath
(2) illuminating, layer by layer, the printing material with a light source with a room light modulator through the bottom of the bath while curing a layer,
(3) moving the carrier structure with the formed layer of the printing material so that a subsequent layer of the printing material is illuminated on the formed layer,
steps (2) to (3) being repeated until the desired three-dimensional structure is formed.

9. A method according to one of the preceding claims, **characterised in that** the regional modification in the volume is carried out by radiating and focusing laser radiation with ultrashort laser pulses having a pulse duration of <10 ps onto the region to be modified, wherein the regional modification on the surface and/or in the volume of the structure is effected by the ultra-short laser pulses, the ultrashort laser pulses particularly causing the organic components of the inorganic-organic hybrid polymer to carbonate, which blackens the area to be modified and/or makes it electrically conductive, wherein the laser pulses preferably have a pulse repetition rate of 1 to 500 kHz and/or a pulse energy of 10 to 3000 nJ and/or the laser wavelength is in the range of 300 to 2200 nm and/or the laser beam diameter at the focus is in the range of < 30 µm.

10. A method according to any one of the preceding claims, **characterised in that** the regional modification is carried out by the following step:
Generating an achromatic element via an inkjet printing process, **in that** during the inkjet printing process, the first printing material is at least temporarily replaced by a further printing material that has a refractive index differing from that of the first printing material.

11. An optical element comprising a three-dimensional structure produced from an inorganic-organic hybrid polymer via 3D printing, at least one region having an additional functionality being arranged on the surface and/or in the volume of the structure,
**characterised in that** the additional functionality is selected from the group consisting of light-refracting elements.

12. An optical element according to claim 11, **characterised in that** an additional functionality is arranged in at least one further region on the surface and/or in the volume of the structure, the additional functionality of the further region being selected from the group consisting of light-absorbing structures, light-reflecting structures, light-scattering structures and electrical functionalities.

13. An optical element according to any one of claims 11 or 12, **characterised in that** the optical element can be produced by 3D printing, in particular by an inkjet printing process, stereolithography, digital light processing technology (DLP).

14. An optical element according to any one of claims 11 to 13, **characterised in that** the inorganic-organic hybrid polymer is produced by hydrolysis and poly-condensation reactions of at least one alkoxy- or hydroxysilane of the general formula I:
RₓSi(OR')₄₋ₓ (I)
where
R = organic group; selected from C1-C8, in particular methyl, ethyl, isopropyl, tert-butyl, cyclohexyl, phenyl, and optionally functionalised, in particular with vinyl, allyl, glycidyloxypropyl, [2-(3,4-epoxycyclohexyl)ethyl] trimethoxysilane, (meth)acryloxy-propyl, styryl, thiolenes, norbornylenes,
R' = H, C1-C8-alkyl, in particular methyl or ethyl,
wherein Si can be at least partially replaced by zirconium and/or titanium.

15. An optical element according to any one of claims 11 to 14, **characterised in that** the light-refracting elements are producible by a modification, in particular a carbonisation, of the organic components of the inorganic-organic hybrid polymer via ultrashort laser pulses.

## Revendications

1. Procédé pour la génération numérique d'un élément optique avec des fonctionnalités intégrées, selon lequel
a) une structure tridimensionnelle est générée par impression 3D à partir d'un matériau d'impression contenant un polymère hybride inorganique-organique,
b) dans la structure tridimensionnelle, au moins une zone avec une fonctionnalité supplémentaire est générée par une modification par zones sur la surface et/ou dans le volume de la structure,
**caractérisé en ce que** la fonctionnalité supplémentaire est choisie dans le groupe constitué par des éléments réfringents.

2. Procédé selon la revendication 1, **caractérisé en ce que**, dans la structure tridimensionnelle, au moins une autre zone avec une fonctionnalité supplémentaire est générée par une modification par zones sur la surface et/ou dans le volume de la structure, dans lequel la fonctionnalité supplémentaire de l'autre zone est choisie dans le groupe constitué par des éléments absorbant la lumière, des éléments réfléchissant la lumière, des éléments diffusant la lumière et des fonctionnalités électriques.

3. Procédé selon l'une quelconque des revendications précédentes, **caractérisé en ce que** le polymère hybride inorganique-organique est obtenu par des réactions d'hydrolyse et de polycondensation d'au moins un alcoxy- ou hydroxysilane de formule générale I :
RₓSi(OR')₄₋ₓ (I)
avec
R = groupe organique ; choisi parmi C1 - C8, en particulier méthyle, éthyle, isopropyle, tert-butyle, cyclohexyle, phényle, et éventuellement fonctionnalisé, en particulier avec vinyle, allyle, gly-cidyloxypropyle, [2-(3,4-époxycyclohexyl)éthyl]triméthoxy-silane, (méth-)acryloxypropyle, styryle, thiolène, norbornène,
R' = H, alkyle en C1-C8, en particulier méthyle ou éthyle,
dans lequel Si peut être remplacé au moins partiellement par du zirconium et/ou du titane.

4. Procédé selon l'une quelconque des revendications précédentes, **caractérisé en ce que** le matériau d'impression contient
• des particules à indice de réfraction élevé, de préférence de l'oxyde de zirconium ou de l'oxyde de titane, ou des nanoparti-cules pour augmenter l'absorption du laser,
• des particules diffusantes,
• des particules pour ajuster la conductivité thermique, la dispersion, la dilatation thermique,
• des particules en tant qu'étiquette, ou
• des combinaisons de celles-ci.

5. Procédé selon l'une quelconque des revendications précédentes, **caractérisé en ce que** l'impression 3D s'effectue au moyen d'un procédé d'impression à jet d'encre, d'une stéréolithographie ou d'une technologie de traitement numérique de la lumière (DLP).

6. Procédé selon la revendication précédente, **caractérisé en ce que**, lors de la génération de la structure tridimensionnelle au moyen d'un procédé d'impression à jet d'encre, les étapes de procédé suivantes sont mises en œuvre :
(1) l'éjection d'une pluralité de gouttelettes du matériau d'impression contenant le polymère hybride inorganique-organique en direction d'un substrat, dans lequel les gouttelettes sont déposées côte à côte pour la réalisation d'une couche.
(2) le durcissement photochimique de la pluralité de gouttelettes dans la couche au moyen d'un rayonnement, de préférence rayonnement UV ou éclairage DEL bleu,
dans lequel les étapes (1) et (2) sont répétées jusqu'à la constitution de la structure tridimensionnelle souhaitée, dans lequel la viscosité du matériau d'impression est de préférence ajustée avec un diluant réactif, en particulier le diméthacrylate de dodécanediol ou le méthacrylate d'éthyle, dans la plage de 10 à 50 mPas.

7. Procédé selon la revendication 5, **caractérisé en ce que**, lors de la génération de la structure tridimensionnelle par stéréolithographie, les étapes de procédé suivantes sont mises en œuvre :
(1) la fourniture du matériau d'impression sur une structure de support dans un bain
(2) l'exposition couche par couche du matériau d'impression à une source de lumière (UV) focalisée tramée à travers le fond du bain, avec durcissement d'une couche,
(3) le déplacement de la structure de support avec la couche formée du matériau d'impression de sorte qu'une couche suivante du matériau d'impression soit exposée sur la couche formée,
dans lequel les étapes (2) à (3) sont répétées jusqu'à la constitution de la structure tridimensionnelle souhaitée.

8. Procédé selon la revendication 5, **caractérisé en ce que**, lors de la génération de la structure tridimensionnelle au moyen de la technologie de traitement numérique de la lumière (DLP), les étapes de procédé suivantes sont mises en œuvre :
(1) la fourniture du matériau d'impression sur une structure de support dans un bain
(2) l'exposition du matériau d'impression couche par couche à une source de lumière avec un modulateur spatial de lumière à travers le fond du bain, avec durcissement d'une couche,
(3) le déplacement de la structure de support avec la couche formée du matériau d'impression de sorte qu'une couche suivante du matériau d'impression soit exposée sur la couche formée,
dans lequel les étapes (2) à (3) sont répétées jusqu'à la constitution de la structure tridimensionnelle souhaitée.

9. Procédé selon l'une quelconque des revendications précédentes, **caractérisé en ce que** la modification par zones dans le volume s'effectue par une émission et focalisation d'un rayonnement laser avec des impulsions laser ultracourtes d'une durée d'impulsion < 10 ps sur la zone à modifier, dans lequel la modification par zones s'effectue par les impulsions laser ultracourtes sur la surface et/ou dans le volume de la structure ; dans lequel en particulier une carbonisation des composants organiques du polymère hybride inorganique-organique, par laquelle la zone à modifier est noircie et/ou devient électriquement conductrice, s'effectue par les impulsions laser ultracourtes, dans lequel les impulsions laser présentent de préférence un taux de répétition d'impulsions de 1 à 500 kHz et/ou une énergie d'impulsion de 10 à 3000 nJ et/ou la longueur d'onde de laser se situe dans la plage de 300 à 2200 nm et/ou le diamètre de faisceau laser dans le foyer se situe dans la plage < 30 µm.

10. Procédé selon l'une quelconque des revendications précédentes, **caractérisé en ce que** la modification par zones s'effectue par l'étape suivante :
la génération d'un élément achromatique au moyen d'un procédé d'impression à jet d'encre, du fait que, pendant le procédé d'impression à jet d'encre, le premier matériau d'impression est remplacé au moins temporairement par un autre matériau d'impression qui présente un indice de réfraction différent du premier matériau d'impression.

11. Elément optique contenant une structure tridimensionnelle obtenue par impression 3D à partir d'un polymère hybride inorganique-organique, dans lequel au moins une zone avec une fonctionnalité supplémentaire est disposée sur la surface et/ou dans le volume de la structure,
**caractérisé en ce que** la fonctionnalité supplémentaire est choisie dans le groupe constitué par des éléments réfringents.

12. Elément optique selon la revendication 11, **caractérisé en ce qu'**au moins une autre zone avec une fonctionnalité supplémentaire est disposée sur la surface et/ou dans le volume de la structure, dans lequel la fonctionnalité supplémentaire de l'autre zone est choisie dans le groupe constitué par des structures absorbant la lumière, des structures réfléchissant la lumière, des structures diffusant la lumière et des fonctionnalités électriques.

13. Elément optique selon l'une quelconque des revendications 11 ou 12, **caractérisé en ce que** l'élément optique peut être obtenu par impression 3D, en particulier par procédé d'impression à jet d'encre, stéréolithographie, technologie de traitement numérique de la lumière (DLP).

14. Elément optique selon l'une quelconque des revendications 11 à 13, **caractérisé en ce que** le polymère hybride inorganique-organique est obtenu par des réactions d'hydrolyse et de polycondensation d'au moins un alcoxy- ou hydroxysilane de formule générale I :
RₓSi(OR')₄₋ₓ (I)
avec
R = groupe organique ; choisi parmi C1 - C8, en particulier méthyle, éthyle, isopropyle, tert-butyle, cyclohexyle, phényle, et éventuellement fonctionnalisé, en particulier avec vinyle, allyle, glycidyloxypropyle, [2-(3,4-époxycyclohexyl)éthyl]triméthoxy-silane, (méth-)acryloxypropyle, styryle, thiolène, norbornène,
R' = H, alkyle en C1-C8, en particulier méthyle ou éthyle,
dans lequel Si peut être remplacé au moins partiellement par du zirconium et/ou du titane.

15. Elément optique selon l'une quelconque des revendications 11 à 14, **caractérisé en ce que** les éléments réfringents peuvent être fabriqués par une modification, en particulier une carbonisation, des composants organiques du polymère hybride inorganique-organique au moyen d'impulsions laser ultracourtes.
